Europäisches Patentamt

European Patent Office

Office européen des brevets

(11) Numéro de publication: **0 305 293**
**A1**

## (12) DEMANDE DE BREVET EUROPEEN

(21) Numéro de dépôt: **88402158.5**

(22) Date de dépôt: **25.08.88**

(51) Int. Cl.⁴: **E 03 B 7/12**
**F 16 K 17/164**

(30) Priorité: **25.08.87 FR 8711881**

(43) Date de publication de la demande:
**01.03.89 Bulletin 89/09**

(84) Etats contractants désignés:
**AT BE CH DE ES FR GB GR IT LI LU NL SE**

(71) Demandeur: **SEBBA**
**ZAC Route de Trégastel**
**F-22300 Lannion (FR)**

(72) Inventeur: **Amouriq, Bernard**
**décédé (FR)**

**Amouriq, Paul**
**27 Rue des Templiers**
**F-22300 Lannion (FR)**

(74) Mandataire: **CABINET BONNET-THIRION**
**95 Boulevard Beaumarchais**
**F-75003 Paris (FR)**

(54) Robinet de protection, en particulier contre les dégâts du gel, et procédé de protection d'une installation de distribution d'eau contre les dégâts du gel.

Il s'agit d'un robinet dont l'organe de fermeture (17) est propre à contrôler le passage (16) s'étendant entre un embout d'entrée (15A) et un embout de sortie (15D).

Suivant l'invention, il est prévu un détecteur de pression (22), qui est sensible à la pression régnant dans un tronçon de circuit s'étendant d'un clapet anti-retour (24) disposé en amont de l'organe de fermeture (17) à un organe d'arrêt (12) disposé en aval de celui-ci, et auquel sont asservis les moyens de commande de cet organe de fermeture (17).

Application, notamment, à la protection contre le gel d'une quelconque installation de distribution d'eau.

FIG.1

Description

**"Robinet de protection, en particulier contre les dégâts du gel, et procédé de protection d'une installation de distribution d'eau contre les dégâts du gel"**

La présente invention concerne d'une manière générale la protection d'une quelconque installation, et elle vise plus particulièrement, mais non nécessairement exclusivement, la protection d'une quelconque installation de distribution d'eau contre les dégâts du gel.

Ainsi qu'on le sait, pour qu'une installation de distribution d'eau gèle et que le gel dont elle est alors l'objet entraîne un éclatement d'une quelconque de ses canalisations ou tuyauteries, il faut normalement que se trouvent simultanément réunies deux conditions.

Il faut tout d'abord que, aucune ponction d'eau n'y étant pratiquée, elle ne soit pas l'objet d'un écoulement notable d'eau pendant un temps suffisamment prolongé, soit que les organes d'arrêt, robinets ou autres, qu'elle comporte, soient correctement fermés et étanches et qu'elle soit ainsi en quelque sorte en cul-de-sac par rapport à l'arrivée d'eau qui la dessert, soit que, défectueux, l'un de ces organes de fermeture soit l'objet d'une fuite légère permanente, sans que l'écoulement correspondant soit alors suffisant pour empêcher le gel de s'établir.

Il faut, ensuite, qu'une zone sensible de cette installation, par exemple une tuyauterie non isolée, se trouve exposée pendant un temps suffisant à une température inférieure à 0°C, comme cela peut en pratique être le cas en hiver, le plus souvent dans la nuit.

Dans le cas par exemple d'une maison d'habitation bien isolée, il peut suffire d'une fenêtre laissée malencontreusement entr'ouverte ou d'un joint de porte défectueux pour que, un souffle d'air glacé passant alors sur une canalisation présente à proximité, il en résulte le gel d'une partie au moins de l'installation de distribution d'eau correspondante.

Dans le cas d'une maison inhabitée, comme cela est le cas fréquemment en hiver pour les résidences secondaires, ou dans un local non chauffé, comme cela est le cas de certaines installations industrielles, une baisse anormale de la température extérieure peut également conduire au même résultat.

La première conséquence du gel dont peut ainsi être l'objet une installation de distribution d'eau est que, même si ce gel n'intervient que localement, cette installation ne fonctionne plus, au détriment de ses usagers.

Mais, et surtout, la deuxième conséquence est que, en raison de la surpression qu'il induit par augmentation de volume, surpression qui s'ajoute alors à la propre pression de distribution, ce gel s'accompagne quasi immanquablement de la rupture d'un joint ou de l'éclatement d'une canalisation ou d'une tuyauterie.

Même si la maison est habitée, ce gel et ses dégâts potentiels passent d'abord généralement inaperçus, surtout s'ils interviennent la nuit, jusqu'à la première tentative de ponction d'eau, ou jusqu'au plus prochain dégel.

Lorsqu'un tel dégel intervient, la glace fond, et l'eau sous pression s'échappe alors dans la maison ou dans le local concerné, parfois pendant plusieurs jours si, antérieurement, la précaution n'avait pas été prise de fermer le robinet d'arrêt général usuellement prévu sur l'arrivée d'eau correspondante.

Lorsque la maison est habitée, la fermeture de ce robinet d'arrêt général suffit à circonscrire les dégâts, cependant déjà dommageables en soi.

Mais, si la maison est inhabitée, les dégâts peuvent alors être considérables.

Pour obvier à ce danger, divers palliatifs ont déjà été proposés.

Certains de ces palliatifs, complètement inertes, sont constitués par des corps morts compressibles à introduire dans la tuyauterie à protéger, pour permettre à la glace en cours de formation de gagner du volume en les comprimant et ainsi ménager cette tuyauterie.

Outre qu'ils conduisent à une réduction de la section de passage utile de la tuyauterie concernée, ces corps morts ont l'inconvénient d'être chers à la pose, leur mise en place dans une tuyauterie déjà installée exigeant normalement un démontage quasi total de celle-ci.

De plus, leur compression induit, en réaction, le dégagement, au sein de la tuyauterie, d'une surpression non négligeable, qui, même si, dûment contrôlée, elle reste minime, peut être à l'origine d'un endommagement de cette tuyauterie ou des organes qu'elle dessert.

Suivant d'autres palliatifs, il est assuré une protection statique, par l'établissement d'un revêtement isolant et chauffant, ou dynamique, par l'établissement d'une circulation de fluide caloporteur, de l'installation concernée ou d'une partie au moins de celle-ci.

Ces palliatifs sont eux-mêmes dispendieux.

En outre, lorsqu'il s'agit d'une protection statique à revêtement isolant et chauffant, ils se trouvent en défaut en cas de coupures d'électricité, et, lorsqu'il s'agit d'une protection par circulation de fluide caloporteur, seules de petites zones de l'installation concernée peuvent être ainsi protégées, sauf à atteindre des coûts prohibitifs.

D'autres palliatifs, enfin, font intervenir une protection réactive, par mise en oeuvre d'une sonde sensible à la température, soit de l'air ambiant, soit du fluide véhiculé, en l'espèce de l'eau.

Par exemple, cette sonde déclenche, en cas de gel, par commande d'électro-vannes prévues à cet effet, une vidange de tout ou partie de l'installation à protéger.

En variante, elle provoque, mais sans usage de l'électricité, l'ouverture, d'abord partielle, puis totale, si la température baisse suffisamment, d'une vidange, ce qui induit, dans l'installation, un débit constant propre à empêcher le gel de s'établir.

Dans le premier cas, de tels palliatifs se trouvent en défaut en cas de coupures d'électricité.

Dans tous les cas, et outre le caractère dispendieux de l'eau perdue, parfois pendant plusieurs jours, ils peuvent s'avérer inefficaces dans la mesure où une quelconque zone de l'installation ainsi traitée éloignée de la sonde peut se trouver soumise à un courant d'air glacé provoquant le gel avant que cette sonde se déclenche.

Dans tous les cas, également, les palliatifs de ce type présentent l'inconvénient majeur de ne protéger l'installation concernée que dans la zone de détection de leur sonde, tout le reste de cette installation pouvant être victime d'un gel partiel sans que la sonde en soit affectée.

En particulier, l'installation n'est protégée qu'en amont de la sonde, et non pas en aval, où le gel reste possible.

Certes, il est envisageable de disposer la sonde en bout de l'installation.

Mais cela ne correspond alors pas nécessairement à la zone de l'installation la plus exposée à une baisse de température.

La présente invention a d'une manière générale pour objet une disposition, propre, notamment, à permettre d'assurer de manière économique et efficace toute la protection souhaitée d'une quelconque installation contre une quelconque surpression et conduisant en outre à d'autres avantages.

De manière plus précise, elle a tout d'abord pour objet un robinet de protection susceptible de donner à cet égard satisfaction ; elle a encore pour objet un procédé plus spécifique de protection contre les dégâts du gel d'une installation de distribution d'eau mettant en oeuvre un tel robinet ou une réalisation équivalente.

Comme tous les robinets, le robinet de protection suivant l'invention est du genre comportant, dans un corps, un organe de fermeture, qui, disposé entre un embout d'entrée destiné à être raccordé à une arrivée de fluide, en l'espèce une arrivée d'eau lorsqu'il s'agit de l'équipement d'une installation de distribution d'eau, et un embout de sortie destiné à être raccordé à un circuit à desservir en un tel fluide, est susceptible d'occuper dans ledit corps l'une ou l'autre de deux positions, à savoir une position d'ouverture, pour laquelle il laisse libre le passage s'étendant entre l'embout d'entrée et l'embout de sortie, et une position de fermeture pour laquelle il occulte ce passage, et des moyens de commande propres à agir sur ledit organe de fermeture.

Suivant l'invention, ce robinet de protection est d'une manière générale caractérisé en ce qu'il comporte un détecteur de pression, qui est sensible à la pression régnant dans un tronçon de circuit s'étendant d'un clapet anti-retour disposé en amont de l'organe de fermeture à un organe d'arrêt disposé en aval de celui-ci, et auquel sont asservis les moyens de commande de cet organe de fermeture.

Selon une première forme de réalisation envisageable, le clapet anti-retour est distinct de l'organe de fermeture, soit qu'il soit quand même implanté dans le même corps que celui-ci ou à proximité immédiate de ce corps, soit qu'il soit au contraire implanté à distance de ce corps, en appartenant, par exemple, suivant un développement de cette disposition, à un autre dispositif, comme cela peut être le cas pour la protection contre le gel d'un chauffe-eau et du circuit de distribution d'eau chaude desservi par celui-ci, le dispositif de sécurité équipant usuellement un tel chauffe-eau comportant normalement un tel clapet anti-retour sur l'arrivée d'eau froide correspondante.

En variante, suivant une deuxième forme de réalisation envisageable, l'organe de fermeture constitue par lui-même le clapet anti-retour.

Quoi qu'il en soit, l'organe d'arrêt disposé en aval étant normalement fermé, le tronçon de circuit de l'installation concernée qui se trouve délimité entre cet organe d'arrêt et le clapet anti-retour disposé en amont confine, entre cet organe d'arrêt et ce clapet anti-retour, un volume de fluide déterminé.

Pour une température donnée, il correspond à ce volume déterminé une pression déterminée, constante en chaque point du tronçon de circuit concerné, au moins pour sa valeur maximale, celle-ci se trouvant fixée par les caractéristiques physiques de ce tronçon de circuit.

Le détecteur de pression que comporte le robinet de protection suivant l'invention a à charge de contrôler cette pression, pour intervenir en cas de surpression.

De ce point de vue, ce robinet de protection trouve d'une manière générale son application à toutes les installations pour lesquelles il existe un risque d'éclatement par surpression, qu'il s'agisse d'une installation dans laquelle circule de la vapeur ou un quelconque fluide susceptible de présenter un certain danger, ou qu'il s'agisse plus simplement d'une installation de distribution d'eau à protéger contre le gel.

Dans ce dernier cas, en effet, et comme déjà mentionné ci-dessus, le changement d'état que matérialise le gel s'accompagne d'une surpression, le volume de la glace étant, à poids égal, supérieur à celui de l'eau.

Ainsi qu'on le sait, le point de volume minimal de l'eau en fonction de la température se situant à 3,92°C, la pression, dans un volume déterminé, commence à monter dès que la température s'abaisse en dessous de cette valeur en allant vers 0°C, et elle devient très rapidement importante si la température continue à descendre.

Ainsi, dès que, dans l'installation concernée, de la glace, d'abord sans danger, sous forme de paillettes en aiguille allongées radialement, apparaît en un point quelconque du tronçon de circuit qui s'étend entre le clapet de fermeture disposé en amont et l'organe d'arrêt disposé en aval, l'augmentation de volume qui en résulte pour l'ensemble engendre une surpression, le volume offert par ce tronçon de circuit restant, lui, quasi constant, la variation de volume dont il est lui-même l'objet pouvant être considérée comme négligeable par rapport à la variation de volume liée au changement d'état de l'eau et jouant d'ailleurs dans le même sens que celui-ci puisqu'il s'agit alors d'une rétraction.

Autrement dit, par le biais de la surpression prenant naissance au gel, le détecteur de pression équipant le robinet de protection suivant l'invention est sensible, dans ce cas, à la dilatation ou à la rétraction différentielle entre l'eau et le tronçon de circuit qui la contient, et, de ce point de vue, ce tronçon de circuit constitue à cet égard par lui-même une sonde dont ce détecteur de pression assure le relevé par une mesure volumétrique.

Cela permet avantageusement à ce détecteur de pression de fonctionner même à distance du point du tronçon de circuit qui commence très précisément à être l'objet d'un gel, car, ce tronçon de circuit étant rempli d'eau, il est sujet en tous points à la surpression provoquée par ce gel.

Lorsque, ainsi mis en oeuvre, ce détecteur de pression intervient, il déclenche l'entrée en action des moyens de commande contrôlant l'organe de fermeture associé.

Par exemple, et suivant une forme de réalisation, ces moyens de commande peuvent comporter des moyens élastiques propres à agir sur cet organe de fermeture sous le contrôle d'une gâchette, et le détecteur de pression comporte un tiroir, formant détente, qui, monté mobile à étanchéité dans son logement, à l'encontre de moyens élastiques de rappel le sollicitant en permanence en direction du débouché dudit logement dans le passage entre l'embout d'entrée et l'embout de sortie, est apte à provoquer la libération de ladite gâchette.

En variante, ils peuvent comporter au moins un aimant, l'organe de fermeture étant alors attelé à une armature qui, disposée entre lui et ledit aimant, est soumise à ce dernier, pour sa commande en fermeture.

Quoi qu'il en soit, une fois l'organe de fermeture commandé en fermeture, qu'il s'agisse d'un clapet, d'une bille ou d'une membrane alors appliqué contre un siège, d'un boisseau ou d'un papillon pivoté en conséquence, ou d'un quelconque autre organe de fermeture, le tronçon de circuit concerné de l'installation ainsi protégée se trouve isolé de l'arrivée de fluide correspondante.

A supposer, donc, que, en raison de la surpression qui y a pris naissance, ce tronçon de circuit se trouve endommagé, il n'est plus dès lors alimenté en fluide sous pression, ce qui limite d'autant les dégâts.

De préférence, cependant, suivant un développement de l'invention, il est prévu une communication entre, d'une part, le passage qui s'étend entre l'embout d'entrée et l'embout de sortie, et, d'autre part, un volume d'évacuation susceptible d'être relié à une décharge, et, comme l'organe de fermeture, cette communication est sous le contrôle du détecteur de pression.

Ainsi, lorsque le détecteur de pression intervient en réponse à une surpression, il assure, conjointement à la fermeture de l'organe de fermeture associé, une décompression, voire même une vidange au moins partielle du tronçon de circuit concerné, c'est-à-dire du tronçon de circuit s'étendant entre cet organe de fermeture et l'organe d'arrêt disposé en aval.

Le volume correspondant restant faible, le parti peut être pris de voir ce volume se déverser librement sur le sol proche, les dégâts correspondants ne pouvant être que limités et bien confinés, voire nuls si le robinet de protection est par exemple implanté en sous-sol, dans un local raccordé à un caniveau d'évacuation.

Mais, en variante, il peut également être associé à ce robinet de protection un volume de recueil propre à en accueillir la vidange, par exemple un simple seau disposé en dessous de lui, ou encore un sac en matière synthétique, qui, replié sur lui-même, se développera de lui-même au fur et à mesure au cours d'un tel recueil.

Dans un tel cas, la protection est totale.

Dans tous les cas, le détecteur de pression équipant le robinet de protection suivant l'invention déclanchant l'intervention de celui-ci dès l'apparition d'une surpression dans le tronçon de circuit concerné, ce tronçon de circuit se trouve avantageusement ménagé de toute dégradation.

Autrement dit, toute rupture de joint ou tout éclatement de canalisation ou de tuyauterie dans ce tronçon de circuit se trouve avantageusement évité, et l'installation correspondante est prête à fonctionner à nouveau, dès lors que, le robinet de protection suivant l'invention étant équipé à cet effet d'une poignée de réarmement propre à le ramener à sa configuration initiale, ce robinet de protection a été dûment réarmé.

En bref, le robinet de protection suivant l'invention, que l'on peut qualifier de disjoncteur hydraulique, est avantageusement susceptible d'assumer une pluralité de fonctions.

Tout d'abord, il signale, par ses déclenchements au froid, que l'installation concernée, ainsi sensible au froid, est mal protégée contre d'éventuels dégâts dus au gel, et qu'il convient donc d'y remédier.

De plus, lorsqu'un gel intervient effectivement en un point de cette installation, il ferme l'arrivée d'eau la desservant.

Corollairement, après cette fermeture de l'arrivée d'eau, il assure une décompression de l'installation, par mise en communication de celle-ci avec un volume d'évacuation, ce qui, en augmentant ainsi son volume propre, renforce d'autant la résistance de cette installation aux contraintes induites par le gel de l'eau qu'elle contient, et ce qui recule ainsi de plusieurs degrés centigrades le risque qu'elle soit l'objet d'un quelconque endommagement, en évitant, en pratique, dans la majorité des cas, qu'un tel endommagement se produise.

Enfin, il assure, si désiré, une vidange au moins partielle de l'installation, sous réserve, bien entendu, que celle-ci soit équipée en conséquence d'une entrée d'air automatique, cette vidange pouvant de surcroît être totale si, dans son ensemble, cette installation est en pente constante, sans siphon ni point bas.

Ainsi appliquée à la protection d'une installation de distribution d'eau contre les dégâts du gel, la présente invention a encore d'une manière plus générale pour objet un procédé de protection d'une telle installation, caractérisé en ce qu'il consiste à mettre en oeuvre sur au moins un tronçon de circuit de cette installation, un détecteur de pression et à asservir à ce détecteur de pression des moyens de fermeture et/ou de vidange propres à assurer l'isolement de ce tronçon de circuit vis-à-vis de l'arrivée d'eau correspondante et/ou sa mise en communication avec un volume d'évacuation ou une vidange, sans que ce détecteur de pression et ces moyens de fermeture et/ou de vidange appartiennent nécessairement de manière unitaire à un même appareillage, désigné ci-dessus par "robinet de protection", et étant entendu que le tronçon de circuit concerné par eux peut s'étendre à la totalité de l'installation.

Certes, certains appareillages, et tel qu'évoqué ci-dessus, c'est le cas des chauffe-eau, sont équipés d'un groupe de sécurité comportant un détecteur de pression et des moyens de fermeture et/ou de vidange.

Mais, dans ces groupes de sécurité, le détecteur de pression a pour charge d'assurer une vidange au moins partielle de l'appareillage concerné en cas de surpression, à la manière d'une simple soupape de sûreté.

La commande du moyen de fermeture propre à isoler cet appareillage de l'arrivée de fluide correspondante y reste manuelle, à la différence de l'invention.

En outre, à la différence également de l'invention, de tels groupes de sécurité n'ont jamais été proposés pour la protection d'une installation de distribution d'eau contre les dégâts du gel.

Les objets, caractérisques et avantages de l'invention ressortiront d'ailleurs de la description qui va suivre, à titre d'exemple, en référence aux dessins schématiques annexés sur lesquels :

la figure 1 est une vue en coupe axiale d'un robinet de protection suivant l'invention, pour la position d'ouverture de son organe de fermeture ;

la figure 2 est une vue en coupe axiale analogue à celle de la figure 1, pour la position de fermeture de cet organe de fermeture ;

la figure 3 est une vue en coupe axiale qui, analogue à celle de la figure 1, se rapporte à une première variante de réalisation ;

la figure 4 est une vue en coupe axiale partielle, pour la position de fermeture de l'organe de fermeture équipant la variante de réalisation représentée à la figure 3 ;

la figure 5 est une vue en coupe axiale qui, reprenant pour partie celle de la figure 3, se rapporte à une deuxième variante de réalisation ;

la figure 6 est une vue en coupe axiale d'une autre forme de réalisation du robinet de protection suivant l'invention ;

la figure 7 est une autre vue partielle en coupe axiale de cette forme de réalisation, suivant la ligne VII-VII de la figure 3, pour la position d'ouverture de l'organe de fermeture correspondant ;

la figure 8 est une vue partielle en coupe axiale analogue à celle de la figure 7, pour la position de fermeture de cet organe de fermeture ;

les figures 9 et 10 sont des vues qui, chacune respectivement analogues à celles des figures 1 et 2, se rapportent à une autre forme de réalisation ;

les figures 11, 12, 13 sont des vues qui, analogues à celle de la figure 9, se rapportent, chacune respectivement, à des variantes de réalisation.

Ces figures illustrent, à titre d'exemple, l'application de l'invention à la protection contre le gel d'une installation de distribution d'eau, et, plus précisément, à la protection d'un quelconque circuit appartenant à une telle installation.

Sur ces figures, on a schématisé par un tronçon de canalisation l'arrivée de fluide 10A correspondante, en l'espèce une arrivée d'eau, et par un autre tronçon de canalisation le circuit 10D à desservir en eau à partir de cette arrivée d'eau 10A.

En pratique, le circuit 10D à desservir en eau peut avoir une configuration quelconque et/ou une longueur quelconque, et, tel que schématisé en traits interrompus, il peut lui être adjoint, en dérivation, un quelconque appareillage 11 également à desservir en eau.

Quoi qu'il en soit, le circuit 10D à desservir en eau comporte de place en place des organes d'arrêt, robinets ou autres, propres à permettre d'en soutirer de l'eau.

Par mesure de simplicité, seul l'un de ces organes d'arrêt a été schématisé en traits interrompus sur les figures, sous la référence générale 12, en le supposant implanté à l'extrémité du circuit 10D concerné.

Lorsque cet organe d'arrêt 12 est en position de fermeture, le circuit 10D est en cul-de-sac par rapport à lui.

Le robinet de protection 13 suivant l'invention est destiné à être implanté entre l'arrivée d'eau 10A et un tel circuit 10D.

Il comporte un corps 14, doté d'un embout d'entrée 15A, destiné à être raccordé à l'arrivée d'eau 10A, et d'un embout de sortie 15D, destiné à être raccordé au circuit 10D à desservir en eau, avec, de cet embout d'entrée 15A à cet embout de sortie 15D, un passage globalement tubulaire 16.

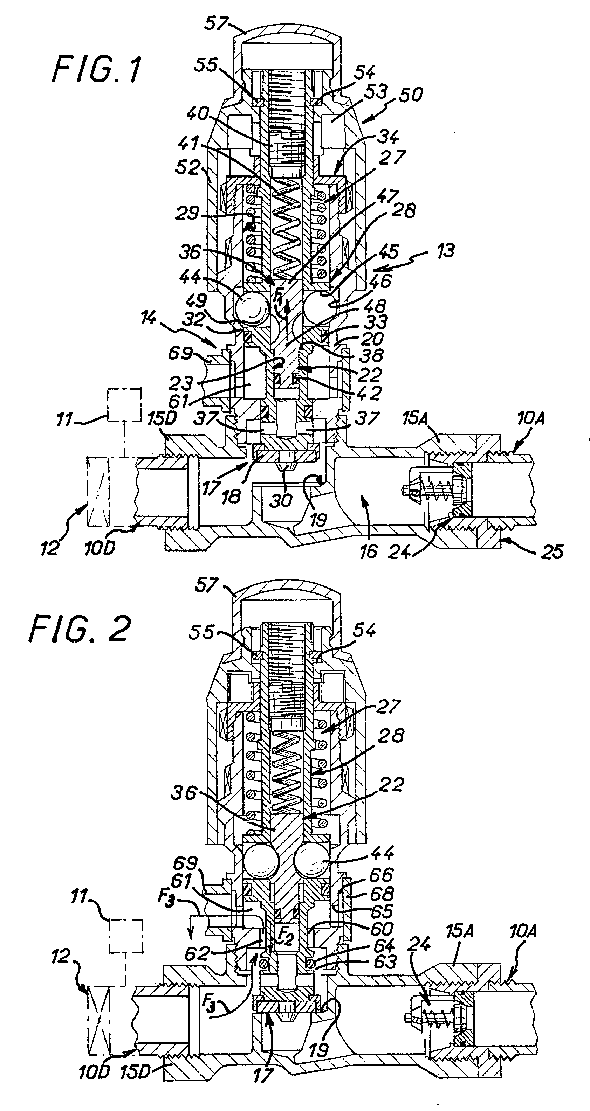

Il comporte, en outre, dans ce corps 14, un organe de fermeture 17, qui, disposé entre l'embout d'entrée 15A et l'embout de sortie 15D, est susceptible d'occuper dans le corps 14 l'une ou l'autre de deux positions, à savoir une position d'ouverture, figure 1, pour laquelle il laisse libre le passage 16 s'étendant entre cet embout d'entrée 15A et cet embout de sortie 15D, et une position de fermeture, figure 2, pour laquelle il occulte ce passage 16, avec, suivant des modalités décrites plus en détail ultérieurement, des moyens de commande propres à agir sur cet organe de fermeture 17.

Dans la forme de réalisation plus particulièrement représentée sur les figures 1 et 2, l'organe de fermeture 17 est un clapet, qui, suivant des modalités décrites plus en détail ultérieurement, est monté mobile parallèlement à lui-même, et qui, par un joint d'étanchéité 18, est apte à s'appliquer à un siège de clapet 19 présent à cet effet dans le passage 16 en interceptant celui-ci.

Ces dispositions relevant de la constitution générale d'un robinet de type usuel et étant donc bien connues par elles-mêmes, elles ne seront pas décrites plus en détail ici.

De manière également connue en soi, le corps 14 du robinet de protection 13 suivant l'invention a, dans la forme de réalisation représentée sur les figures 1 et 2, une forme générale en T renversé.

Ses embouts d'entrée 15A et de sortie 15D forment les branches de ce T, cependant que, dans le jambage 20 correspondant, sont logés les moyens de commande de l'organe de fermeture 17.

Dans la forme de réalisation représentée sur les figures 1 et 2, ce jambage 20 s'étend sensiblement perpendiculairement aux embouts d'entrée 15A et de sortie 15D, et il est rapporté par vissage sur ceux-ci.

Mais il ne s'agit pas là de dispositions impératives.

Suivant l'invention, le robinet de protection 13 ainsi globalement constitué comporte un détecteur de pression 22, qui est sensible à la pression régnant dans un tronçon de circuit s'étendant d'un clapet anti-retour 24 disposé en amont de l'organe de fermeture 17 à l'organe d'arrêt 12 disposé en aval de celui-ci, et auquel sont asservis les moyens de commande de cet organe de fermeture 17.

Dans les formes de réalisation représentées sur les figures 1 à 8, ce détecteur de pression 22 est disposé dans un logement 23 débouchant dans le passage 16 entre l'embout d'entrée 15A et l'embout de sortie 15D.

Dans la forme de réalisation plus particulièrement représentée sur les figures 1 et 2, le clapet anti-retour 24 est distinct de l'organe de fermeture 17, mais il est, comme lui, implanté dans le corps 14.

En pratique, dans cette forme de réalisation, ce clapet anti-retour 24 est implanté dans une douille 25 rapportée par vissage sur l'embout d'entrée 15A, entre cet embout d'entrée 15A et l'arrivée d'eau 10A.

Ainsi donc, dans cette forme de réalisation, ce clapet anti-retour 24 intervient à proximité immédiate de l'organe de fermeture 17, en amont de celui-ci.

Mais il va de soi que, en variante, il pourrait être totalement dissocié du corps 14 du robinet de protection 13, et intervenir donc à une distance quelconque de l'organe de fermeture 17.

Le clapet anti-retour 24 peut même appartenir à un quelconque appareillage indépendant d'un tel robinet de protection 13.

Quoi qu'il en soit, il est disposé de manière à permettre une libre circulation de l'eau de l'arrivée d'eau 10A au circuit 10D à desservir et à s'opposer à une circulation inverse.

Lorsque l'organe d'arrêt 12 est en position de fermeture et que le circuit 10D est ainsi en cul-de-sac, un volume d'eau déterminé se trouve donc confiné entre ce clapet anti-retour 24 et cet organe d'arrêt 12.

La constitution d'un tel clapet anti-retour 24 étant bien connue par elle-même et ne faisant pas en soi l'objet de la présente invention, elle ne sera pas décrite ici.

Dans la forme de réalisation représentée sur les figures 1 et 2, les moyens de commande de l'organe de fermeture 17 comportent des moyens élastiques, qui sont en pratique constitués par un organe élastique de compression 27, en l'espèce un simple ressort du type ressort à boudin, et ils sont propres à agir sur cet organe de fermeture 17 sous le contrôle d'une gâchette 28.

En pratique, dans cette forme de réalisation, la gâchette 28 est une pièce globalement cylindrique, et plus précisément globalement tubulaire, montée mobile axialement dans un logement 29 s'étendant latéralement par rapport au passage 16 entre l'embout d'entrée 15A et l'embout de sortie 15D, ce logement 29 étant formé par l'évidement interne du jambage 20 du corps 14.

A son extrémité interne, c'est-à-dire au débouché de son logement 29 dans le passage 16, la gâchette 28 porte l'organe de fermeture 17.

Par exemple, et tel que représenté, le joint d'étanchéité 18 du clapet formant cet organe de fermeture 17 est encliqueté sur un ergot 30 prolongeant axialement la gâchette 28.

Quoi qu'il en soit, dans cette forme de réalisation, l'organe de fermeture 17 est ainsi disposé dans l'alignement de la gâchette 28, celle-ci le portant suivant son axe.

Dans sa zone médiane, la gâchette 28 présente une portée 32, qui est de diamètre supérieur à celui de sa partie courante, et par laquelle elle est engagée à étanchéité dans son logement 29, cette portée 32 étant équipée à cet effet d'un joint d'étanchéité 33.

L'organe élastique de compression 27 intervient à la partie supérieure de la gâchette 28.

Prenant appui sur un bouchon 34 rapporté par vissage à l'extrémité supérieure du jambage 20 du corps 14, il agit sur cette gâchette 28 en portant sur la face transversale de sa portée 32 opposée à l'organe de fermeture 17.

Conjointement, le détecteur de pression 22 comporte un tiroir 36, formant détente, qui, monté mobile à étanchéité dans le logement 23 correspondant, à l'encontre de moyens élastiques de rappel le sollicitant en permanence en direction du débouché dudit logement 23 dans le passage 16 entre l'embout d'entrée 15A et l'embout de sortie 15D, est apte à provoquer la libération de la gâchette 28.

Dans la forme de réalisation plus particulièrement représentée sur les figures 1 et 2, la gâchette 28 sert par elle-même de logement à ce tiroir 36.

Autrement dit, le logement 23 dans lequel ce tiroir 36 est monté coulissant est formé par l'évidement interne de la gâchette 28.

A sa base, c'est-à-dire du côté de l'organe de fermeture 17, ce logement 23 débouche latéralement, par au moins deux passages 37, à l'intérieur du corps 14, à la base du jambage 20 de celui-ci, et il communique ainsi librement avec le passage 16.

Dans sa zone médiane, le logement 23 présente, transversalement, un épaulement 38, propre, par butée, à la retenue du tiroir 36.

A sa partie supérieure, le logement 23 est obturé par un organe de tarage 40 axialement réglable en position.

Il s'agit, en pratique, d'une vis, la partie supérieure du logement 23 étant taraudée à cet effet.

Accessible de l'extérieur suivant des modalités décrites plus en détail ultérieurement, l'organe de tarage 40 que constitue cette vis est à la disposition de l'usager.

Dans la forme de réalisation représentée, les moyens élastiques de rappel du tiroir 36 du détecteur de pression 22 sont constitués par un organe élastique de compression 41, en pratique un ressort du type ressort à boudin, qui, disposé dans le logement 23, à la partie supérieure de celui-ci, porte sur le tiroir 36 en prenant appui sur l'organe de tarage 40.

Pour l'étanchéité nécessaire, le tiroir 36 porte, annulairement, à sa base, c'est-à-dire du côté de l'organe de fermeture 17, dans la forme de réalisation plus particulièrement représentée sur les figures 1 et 2, un joint d'étanchéité 42.

Entre le corps 14 du robinet de protection 13 suivant l'invention et la gâchette 28 équipant celui-ci sont par ailleurs prévus des moyens de verrouillage débrayables, qui sont aptes à maintenir en position, armée, d'enclenchement, cette gâchette 28, figure 1, et qui sont soumis en débrayage au tiroir 36 formant détente du détecteur de pression 22.

Dans la forme de réalisation plus particulièrement représentée sur les figures 1 et 2, ces moyens de verrouillage débrayables comportent au moins un organe d'encliquetage 44, en l'espèce une bille, qui, monté mobile transversalement dans le logement 45 prévu pour lui dans la gâchette 28, et, plus précisément, dans la portée médiane 32 de celle-ci, est apte à coopérer en verrouillage avec un logement 46 également prévu pour lui sur le corps 14, et, plus précisément, sur le jambage 20 de ce corps 14 en creux sur la surface interne de ce jambage 20.

Conjointement, le tiroir 36, formant détente, du détecteur de pression 22 comporte, d'une part, à sa partie supérieure, un tronçon lisse 47, par lequel il est apte à maintenir l'organe d'encliquetage 44 en prise avec le logement 46 du corps 14, et, d'autre part, dans sa partie médiane, un tronçon encoché, par lequel il est apte à libérer cet organe d'encliquetage 44.

En pratique, dans la forme de réalisation représentée, deux organes d'encliquetage 44 sont prévus en positions diamétralement opposées l'un par rapport à l'autre, avec un nombre égal de logements 46 dans le corps 14 ou une gorge prévue de manière annulaire dans celui-ci, et le tronçon encoché 48 du tiroir 36 résulte d'une gorge qui affecte annulairement en creux ce tiroir 36, et qui, transversalement, a un profil complémentaire de celui des billes constituant les organes d'encliquetage 44.

En pratique, également, la paroi transversale 49 délimitant, dans le corps 14, le logement 46 des organes d'encliquetage 44, est oblique sur l'axe de l'ensemble, en se rapprochant de l'organe de fermeture 17 en même temps qu'elle se rapproche de cet axe.

La gâchette 28 se prolongeant axialement au-delà du bouchon 34 fermant à sa partie supérieure le jambage 20 du corps 14, il lui est associé, à l'extérieur de ce jambage 20, une poignée de réarmement 50.

Cette poignée de réarmement 50, qui, par une jupe 52 propre à en faciliter la manipulation, entoure la partie supérieure du jambage 20 du corps 14, est montée mobile axialement et en rotation par rapport à ce jambage 20, en étant en prise avec celui-ci par une rampe hélicoïdale à échappement 53, suivant des dispositions qui, bien connues par elles-mêmes, notamment pour certains types de robinets thermostatiques, et ne faisant pas partie de la présente invention, ne seront pas décrites ici.

Entourant à sa partie supérieure la partie de la gâchette 28 qui fait saillie hors du corps 14 par le bouchon 34, la poignée de réarmement 50 présente, transversalement, un épaulement 54 par lequel elle est apte à entraîner axialement cette gâchette 28, celle-ci portant à cet effet, en prise dans une gorge qu'elle présente annulairement en creux à sa surface, un anneau 55.

Sur la partie supérieure de la poignée de réarmement 50 est encliqueté, de manière amovible, un capot 57, qui, une fois ôté, donne accès à la vis constituant l'organe de tarage 40 du détecteur de pression 22.

Enfin, et tel que représenté, il est prévu une communication 60 entre, d'une part, le passage 16 qui s'étend entre l'embout d'entrée 15A et l'embout de sortie 15D, et, d'autre part, un volume d'évacuation 61 susceptible d'être relié à une décharge, et, comme l'organe de fermeture 17, et conjointement avec celui-ci, cette communication 60 est sous le contrôle du détecteur de pression 22.

En pratique, dans la forme de réalisation plus particulièrement représentée sur les figures 1 et 2, cette communication 60, qui n'est visible que pour la position déclenchée de la gâchette 28, figure 2, est formée annulairement entre un tronçon de section réduite de la gâchette 28 et une portée interne 62 du jambage 20 du corps 14, la gâchette 28 comportant, au-dessus des passages 37, pour obturation de cette communication 60, une portée 63 par laquelle elle est apte à venir en prise à étanchéité avec la portée 62 précédente, cette portée 63 portant à cet effet un joint d'étanchéité 64.

En outre, dans cette forme de réalisation, le volume d'évacuation 61, qui s'étend annulairement entre la gâchette 28 et le jambage 20 du corps 14, au-dessus de la portée interne 62 de ce jambage 20, communique, par un ou plusieurs passages 65 ménagés transversalement dans ce jambage 20, avec un volume annulaire 66, qui est défini autour de ce jambage 20 par une bague 68 convenablement rapportée sur celui-ci, et qui, par un embout 69, est susceptible d'être relié à la décharge associée, non représentée.

En service, et tel que représenté à la figure 1, la gâchette 28 est normalement retenue en position armée d'enclenchement par les organes d'encliquetage 44, ceux-ci étant maintenus en prise avec les logements 46 correspondants du corps 14 par le tiroir 36, formant détente, du détecteur de pression 22.

Pour cette position armée d'enclenchement, l'organe élastique de compression 27 formant les moyens de commande de l'organe de fermeture 17 sont sous contrainte, et la gâchette 28 maintient cet organe de fermeture 17 à distance de son siège de clapet 19.

En outre, par sa portée 63, elle isole du passage 16 le volume d'évacuation 61.

Conjointement, le tiroir 36 du détecteur de pression 22, qui, sous la sollicitation de l'organe élastique de compression 41 constituant ses moyens élastiques de rappel, est en butée contre l'épaulement transversal 38 de la gâchette 28, est soumis, à sa base, par les passages 37 de la gâchette 28, à la pression régnant dans le passage 16, et donc à la pression régnant dans le tronçon de conduit délimité par le clapet anti-retour 24 et l'organe d'arrêt 12.

Si, par suite d'un gel en un point quelconque du circuit 10D appartenant à ce tronçon de conduit, il se produit dans celui-ci une surpression, le tiroir 36 est progressivement refoulé en conséquence dans son logement 23, à l'encontre de l'organe élastique de compression 41, celui-ci dûment taré préalablement à cet effet par réglage en position appropriée de l'organe de tarage 40 correspondant.

Suivant la flèche F1 de la figure 1, le déplacement correspondant du tiroir 36 dans la gâchette 28 le conduit à s'éloigner de l'organe de fermeture 17.

Lorsque ce déplacement est suffisant, le tronçon encoché 48 de ce tiroir 36 arrive au droit des organes d'encliquetage 44, figure 2, et, ceux-ci pénétrant dans la gorge correspondante de ce tiroir 36 du fait que la sollicitation dont ils sont l'objet, à travers la gâchette 28, de la part de l'organe élastique de compression 27 constituant les moyens de commande de l'organe de fermeture 17, a une composante radiale en direction de l'axe de l'ensemble en raison de leur appui sur une paroi oblique 49 du corps 14, la gâchette 28 se trouve libérée.

Sous la sollicitation de l'organe élastique de compression 27, elle se déplace axialement dans le jambage 20 du corps 14, suivant la flèche F2, inverse de la précédente, de la figure 2, jusqu'à venir appliquer l'organe de fermeture 17 contre son siège de clapet 19 et ainsi isoler le circuit 10D concerné de l'arrivée d'eau 10A.

Par construction, la force de l'organe élastique de compression 27 formant les moyens de commande auxquels est alors soumis l'organe de fermeture 17 est bien entendu faite suffisante pour que la pression d'arrivée de l'eau ne soit pas en mesure de refouler cet organe de fermeture 17, ou autrement dit, pour que cet organe de fermeture 17 soit alors en toute certitude maintenu en position de fermeture.

Conjointement, la communication 60 entre le passage 16 et le volume d'évacuation 61 se trouve libérée par la gâchette 28, en sorte que, suivant les flèches F3, l'eau contenue dans le circuit 10D peut s'écouler à l'extérieur, à supposer bien entendu que le robinet de protection 13 correspondant ait été avantageusement placé en un point bas de celui-ci.

Dans un premier temps au moins, et du seul fait de sa mise en communication avec le volume d'évacuation 61, le circuit 10D est avantageusement l'objet d'une décompression.

Dans un deuxième temps, et à supposer bien entendu que ce volume d'évacuation 61 soit lui-même en communication avec l'extérieur ou avec un quelconque volume de recueil approprié prévu à cet effet, le circuit 10D est vidangé.

Ainsi vidangé, le circuit 10D est épargné des effets du gel.

En outre, étant isolé de l'arrivée d'eau 10A, aucune inondation n'est à craindre.

Pour la remise en eau du circuit 10D, il suffit de rappeler en position armée d'enclenchement la gâchette 28, à l'aide de la poignée de réarmement 50.

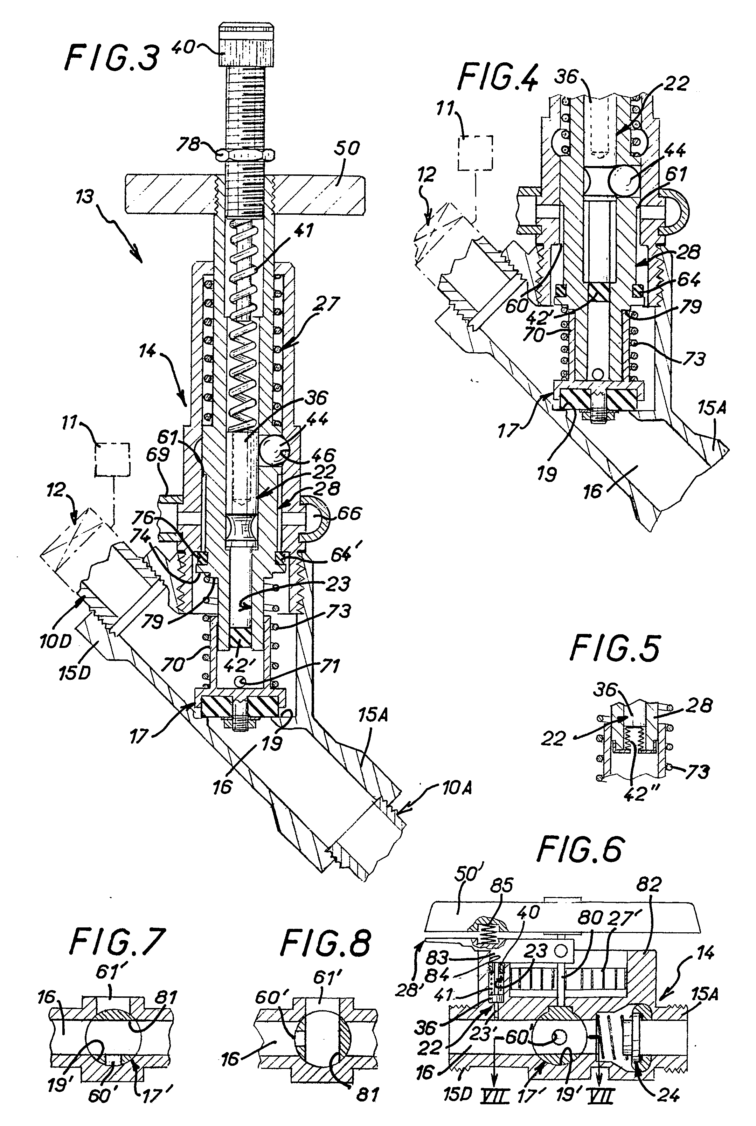

Dans la variante de réalisation illustrée par les figures 3 et 4, l'organe de fermeture 17 forme par lui-même clapet anti-retour.

En effet, au lieu d'être porté rigidement par la gâchette 28, il est monté mobile par rapport à cette gâchette 28 à l'encontre de moyens élastiques de rappel le sollicitant en permanence en direction de son siège de clapet 19.

En pratique, dans la forme de réalisation représentée, l'organe de fermeture 17 est porté par une douille 70 par laquelle, pour son guidage, il est engagé à coulissement sur la gâchette 28, cette douille 70 présentant transversalement au moins un passage 71 propre à mettre en communication le logement 23 du détecteur de pression 22 avec le passage 16.

En outre, dans cette forme de réalisation, les moyens élastiques de rappel de cet organe de fermeture 17 sont constitués par un organe élastique de compression 73, en pratique un simple ressort du type ressort à boudin, interposé entre lui et un épaulement 74 de la gâchette 28.

Pour l'étanchéité nécessaire, le tiroir 36, formant détente, du détecteur de pression 22, porte, à son extrémité, un tampon d'étanchéité 42'.

En variante, figure 5, il peut être prévu, à l'extrémité correspondante de la gâchette 28, un soufflet 42''.

Pour le contrôle de la communication 60 entre le volume d'évacuation 61 et le passage 16, la gâchette 28 porte annulairement un joint d'étanchéité 64' qui, lorsqu'elle est en position armée d'enclenchement, figure 3, se trouve appliqué contre un épaulement 76 prévu transversalement dans le jambage 20 du corps 14, à la base du volume d'évacuation 61.

Par ailleurs, dans la forme de réalisation représentée, un seul organe d'encliquetage 44 est prévu, et la poignée de réarmement 50 associée à la gâchette 28 est une poignée de traction directement calée, par exemple par vissage, sur cette gâchette 28.

Conjointement, dans cette forme de réalisation, la vis constituant l'organe de tarage 40 fait saillie hors de la gâchette 28, et, pour son blocage en position, il lui est associé un contre-écrou 78.

Enfin, dans la forme de réalisation représentée, le jambage 20 du corps 14 est oblique par rapport aux embouts d'entrée 15A et de sortie 15D.

En position déclenchée, figure 4, la gâchette 28 vient s'appliquer, par un épaulement 79, contre la douille 70 porteuse de l'organe de fermeture 17, et elle maintient ainsi celui-ci en application contre son siège de clapet 19, sous la sollicitation dont elle est elle-même l'objet de la part de l'organe élastique de compression 27 constituant les moyens de commande de cet organe de fermeture 17.

Pour le reste, le fonctionnement de cette variante de réalisation est analogue à celui décrit précédemment.

Toutefois, la course nécessaire au tiroir 36 formant détente du détecteur de pression 22 pour libérer la gâchette 28 est plus grande.

Ainsi qu'on le notera, pour être sensible à la pression régnant dans le circuit 10D concerné, le détecteur de pression 22 intervient, dans tous les cas, en aval de l'organe de fermeture 17.

Dans la forme de réalisation schématiquement illustrée sur les figures 6 à 8, l'organe de fermeture 17' est un boisseau qui, monté rotatif dans un siège de clapet 19' complémentaire, est calé en rotation sur un axe 80 propre à sa commande.

En pratique, dans la forme de réalisation représentée, il s'agit d'un boisseau sphérique, c'est-à-dire d'une sphère, et celle-ci est diamétralement traversée de part en part par un passage 81, qui, lorsqu'il est aligné avec le passage 16, figures 6 et 7, met en communication l'embout d'entrée 15A avec l'embout de sortie 15D.

Pour des raisons qui apparaîtront ci-après, un perçage latéral 60' affecte transversalement ce boisseau, en débouchant dans le passage 81 de celui-ci.

Par ailleurs, la gâchette 28' associée est un levier, qui est monté pivotant, et sur lequel est apte à agir le tiroir 36, formant détente, du détecteur de pression 22.

Comme précédemment, ce détecteur de pression 22 intervient en aval du boisseau constituant l'organe de fermeture 17', et il est disposé dans un logement 23 prévu pour lui dans le corps 14 correspondant.

Comme précédemment, également, le tiroir 36 de ce détecteur de pression 22 est en permanence sollicité en direction du débouché 23' du logement 23 dans le passage 16 par un ressort 41 prenant appui sur un organe de tarage 40 fermant ce logement 23 à sa partie supérieure.

En pratique, le corps 14 forme, autour de l'axe 80, une collerette 82, et les moyens de verrouillage débrayables associés à la gâchette 28' comportent un ergot 83, qui, prévu en saillie sur l'un quelconque des éléments que constituent ce corps 14 et cette gâchette 28', est propre à coopérer en emboîtement avec un logement 84 prévu de manière complémentaire en creux sur l'autre de ces éléments.

Dans la forme de réalisation représentée, l'ergot 83 est prévu en saillie sur la gâchette 28', et le logement 84 est prévu en creux sur la tranche de la collerette 82 que comporte le corps 14.

La gâchette 28' est articulée sur l'axe de commande 80 du boisseau constituant l'organe de fermeture 17', et les moyens élastiques appartenant aux moyens de commande de cet organe de fermeture 17' sont constitués par un organe élastique de torsion 27' qui, établi annulairement entre cet axe 80 et la collerette 82 du corps 14, est propre à agir sur ledit axe 80.

La poignée de réarmement 50' associée est elle aussi calée en rotation sur l'axe de commande 80 du boisseau constituant l'organe de fermeture 17', et, dans la forme de réalisation représentée, il est établi, entre elle et la gâchette 28', un organe élastique de compression 85, en pratique un simple ressort, propre à solliciter cette gâchette 28' en direction de la tranche de la collerette 82 du corps 14.

En service, figures 6 et 7, le passage 81 du boisseau constituant l'organe de fermeture 17' est aligné avec le passage 16, cependant que son perçage latéral 60' se trouve occulté.

Lorsque, suivant un processus du type de celui décrit précédemment, le tiroir 36, formant détente, du détecteur de pression 22, libère la gâchette 28', le boisseau constituant l'organe de fermeture 17' pivote d'un quart de tour sous la sollicitation de l'organe élastique de torsion 27' correspondant, figure 8, ce qui, d'une part, le conduit à s'interposer sur le passage 16, en isolant ainsi de l'arrivée d'eau le circuit concerné, et, d'autre part, lui permet d'assurer la décompression, et, éventuellement, la vidange de ce circuit par son perçage 60', celui-ci se trouvant alors en communication avec ce dernier, cependant que le passage 81 avec lequel il communique se trouve lui-même en communication avec un volume d'évacuation 61' prévu latéralement à cet effet dans le corps 14.

Autrement dit, la communication, qui, suivant un développement de l'invention, est prévue, sous le contrôle du détecteur de pression 22, entre le passage 16 et un volume d'évacuation 61', est constituée, dans cette forme de réalisation, par le perçage latéral 60' du boisseau constituant l'organe de fermeture 17' correspondant.

Comme précédemment, la poignée de réarmement 50' permet de ramener ce boisseau à sa position initiale et de ramener conjointement en position armée d'enclenchement la gâchette 28.

Dans ce qui précède, sont prévus, entre la gâchette 28, 28' et le corps 14, des moyens de verrouillage débrayables.

Plus précisément, s'agissant des formes de réalisation des figures 1 à 5, ces moyens de verrouillage débrayables sont constitués par des organes d'encliquetage 44, en l'espèce des billes.

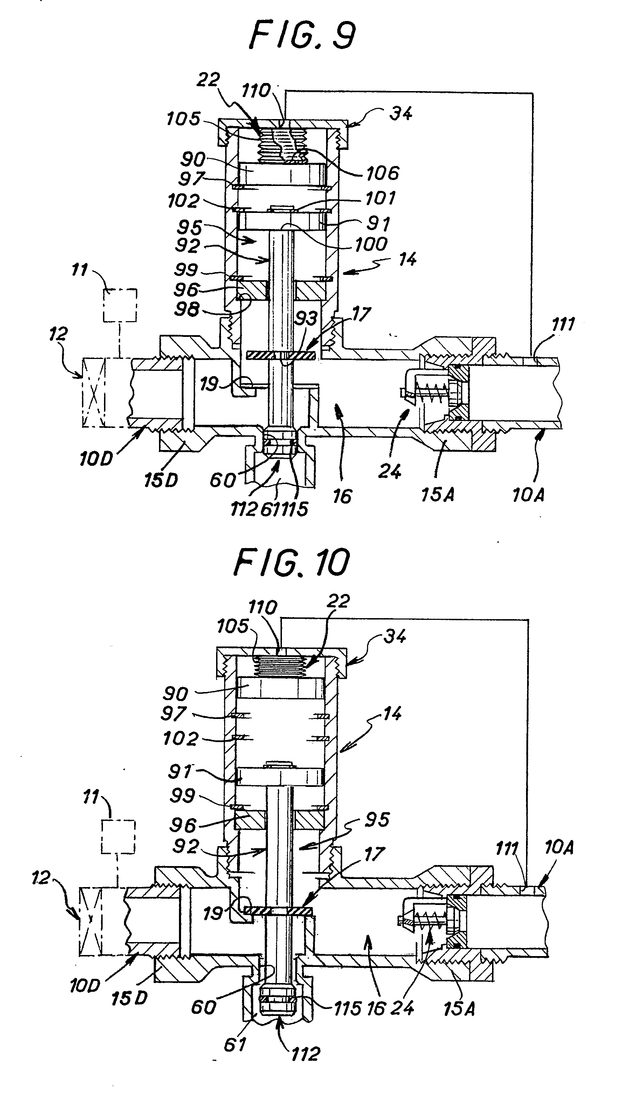

En référence aux figures 9 à 13, seront maintenant décrites des formes de réalisation dont sont exclues de telles billes.

Suivant ces formes de réalisation, les moyens de commande de l'organe de fermeture 17 comportent au moins un aimant 90, dit ci-après par simple commodité premier aimant, et ledit organe de fermeture 17 est attelé à une armature 91, qui, disposée entre lui et ledit premier aimant 90, est soumise à ce dernier.

En pratique, l'organe de fermeture 17 est un clapet qui, comme dans les formes de réalisation représentées sur les figures 1 à 5, est monté mobile parallèlement à lui-même, suivant l'axe du corps 14, et qui est ainsi apte à s'appliquer à un siège de clapet 19 interposé sur le passage 16, entre le clapet anti-retour 24 et l'organe d'arrêt 12.

Dans la forme de réalisation plus particulièrement représentée sur les figures 9, 10, cet organe de fermeture 17 est en prise avec une tige 92, qui, disposée dans l'axe du corps 14, présente à cet effet une gorge 93, et qui, à son extrémité, porte l'armature 91, l'ensemble formant, dans le corps 14, un attelage mobile 95, à la manière de la gâchette 28, 28' précédente.

Plus précisément, dans cette forme de réalisation des figures 9 et 10, le premier aimant 90 est monté mobile dans le corps 14 sous le contrôle du détecteur de pression 22, et les moyens de commande de l'organe de fermeture 17 comportent en outre un deuxième aimant 96, qui, disposé de l'autre côté de l'armature 91 par rapport au premier aimant 90, est fixe.

En pratique, ce premier aimant 90, est monté librement coulissant dans le corps 14, à la partie supérieure de celui-ci, tout en pouvant venir reposer, en position d'attente, sur un anneau élastique fendu 97, qui, en prise avec une gorge du corps 14, forme pour lui une butée.

Conjointement, le deuxième aimant 96, qui est annulaire, et qui entoure, avec jeu, la tige 92 de l'attelage mobile 95, s'étend à la partie inférieure du corps 14, entre un épaulement transversal 98 de celui-ci et un anneau élastique fendu 99 en prise, lui aussi, avec une gorge de ce corps 14.

Dans la forme de réalisation représentée sur les figures 9 et 10, l'armature 91 est constituée par un troisième aimant qui, rapporté sur la tige 92 de l'attelage mobile 95, s'étend entre un épaulement transversal 100 de cette tige 92 et un anneau élastique fendu 101 en prise avec une gorge de celle-ci.

Un anneau élastique fendu 102 en prise avec une gorge du corps 14 définit la position d'ouverture de l'organe de fermeture 17, cet anneau élastique fendu 102 s'étendant entre l'armature 91 et l'anneau élastique fendu 97 définissant conjointement la position d'attente du premier aimant 90.

Conjointement, dans la forme de réalisation représentée sur les figures 9 et 10, le détecteur de pression 22 est constitué par une chambre à volume variable, qui, confinée par exemple par un soufflet 105, s'étend du côté du premier aimant 90 opposé à l'armature 91, et de la paroi mobile 106 de laquelle est solidaire ce premier aimant 90.

Par exemple, et tel que représenté, le soufflet 105 est porté par le bouchon 34 fermant, à sa partie supérieure, le corps 14.

Quoi qu'il en soit, la chambre à volume variable que délimite ce soufflet 105 et qui constitue le détecteur de pression 22 est adaptée à être reliée à l'arrivée de fluide 10A, par exemple par une canalisation s'étendant, tel que schématisé par un trait fin 109, d'un perçage 110 du bouchon 34 à un perçage 111 de l'arrivée de fluide 10A, et, du côté de sa paroi mobile 106 opposé au précédent, c'est-à-dire du côté de cette paroi mobile 106 portant le premier aimant 90, elle est en relation avec le passage 16 s'étendant entre l'embout d'entrée 15A et l'embout de sortie 15D, un jeu suffisant, non clairement visible sur les figures, étant par exemple prévu à cet effet à la périphérie de ce premier aimant 90, aussi bien que de l'armature 91, entre eux et la paroi interne du corps 14.

Enfin, à l'organe de fermeture 17 est asservi un deuxième organe de fermeture 112, et ledit deuxième organe de fermeture 112 contrôle une communication 60 établie entre, d'une part, le passage 16 s'étendant entre l'embout d'entrée 15A et l'embout de sortie 15D, et, d'autre part, un volume d'évacuation 61.

Par exemple, et tel que représenté, les deux organes de fermeture 17, 112 appartiennent à un même attelage, l'attelage mobile 95.

Dans la forme de réalisation représentée, la tige 92 de cet attelage mobile 95 s'étend au-delà de l'organe de fermeture 17, et le deuxième organe de fermeture 112 est formé par un épaississement local de son extrémité, ledit épaississement local comportant, dans une gorge, pour contact avec la paroi interne de la communication 60, qui est cylindrique, un joint d'étanchéité torique 115.

En service, et tel que représenté à la figure 9, le premier aimant 90 est normalement en position basse, en butée contre l'anneau élastique fendu 97, la pression dans le tronçon de circuit s'étendant entre l'embout d'entrée 15A et l'embout de sortie 15D, initialement égale à la pression dans l'arrivée de fluide 10A, étant équilibrée par cette dernière.

Sous les effets du champ magnétique développé par ce premier aimant 90, l'armature 91 est elle-même en position haute, en butée contre l'anneau élastique fendu 102, et, par la tige 92 dont elle est solidaire, elle maintient ainsi en position d'ouverture, écarté de son siège de clapet 19, l'organe de fermeture 17, cependant que, au contraire, l'organe de fermeture 112 occulte la communication 60.

Lorsque, à la suite d'un gel en un point quelconque du circuit 10D concerné, la pression dans le tronçon de circuit s'étendant du clapet anti-retour 24 à l'organe d'arrêt 12 augmente, et, donc, qu'il en est de même pour la différence de pression entre ce tronçon de circuit et l'arrivée de fluide 10A, le soufflet 105 se contracte, et, entraîné par celui-ci, le premier aimant 90, abandonnant sa position d'attente, en butée contre l'anneau élastique fendu 97, se dirige vers le haut, en direction du bouchon 34, tel que représenté à la figure 10.

La distance entre ce premier aimant 90 et l'armature 91 augmentant, la force d'attraction exercée par ce premier aimant 90 sur cette armature 91 diminue, et il arrive un moment où celle exercée conjointement sur cette armature 91 par le deuxième aimant 96 surmonte la précédente et devient ainsi prépondérante.

Ainsi attirée par ce deuxième aimant 96, l'armature 91 abandonne sa position d'attente, en butée contre l'anneau élastique fendu 102, et se dirige vers le bas, en direction de ce deuxième aimant 96.

Par la tige 92, l'organe de fermeture 17 vient alors à être appliqué contre le siège de clapet 19, cependant que, échappant à la communication 60, l'organe de fermeture 112 libère celle-ci.

Comme précédemment, il y a alors vidange du circuit 10D.

En pratique, la mise en oeuvre ainsi faite d'aimants permet avantageusement un déclenchement précis, sûr et instantané, car sensiblement sans frottement.

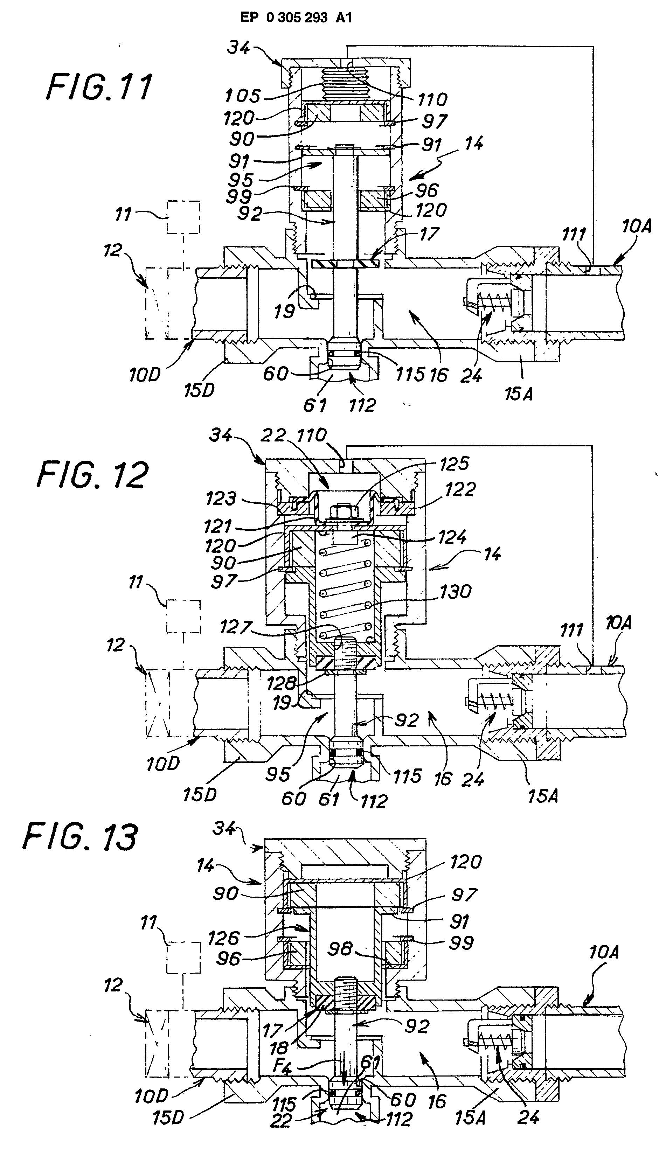

Dans la variante de réalisation représentée sur la figure 11, l'armature 91 est constituée par un disque de fer doux, cependant que, pour augmenter et concentrer les forces magnétiques, il est associé, à chaque aimant 90, 96, une coupelle 120.

Les aimants 90 et 96 sont alors l'un et l'autre annulaires.

Pour le reste, les dispositions sont du type des précédentes.

Dans la variante de réalisation représentée sur la figure 12, la chambre à volume variable constituant le détecteur de pression 22 est confinée, non plus par un soufflet, mais par une membrane déformable 121, pincée, à sa périphérie, entre, d'une part, le bouchon 34, et, d'autre part, une rondelle 122 en appui contre un épaulement transversal 123 du corps 14.

Sur la partie centrale de cette membrane souple 121 est rapportée, par un ensemble vis 124-écrou 125, du côté opposé au bouchon 34, la coupelle 120 porteuse du premier aimant 90.

Comme précédemment, celui-ci est monté mobile, son débattement étant limité, d'une part, par la rondelle 122 précédente, par l'intermédiaire de la coupelle 120, et, d'autre part, par un anneau élastique fendu 97.

Dans la forme de réalisation représentée, l'armature 91 appartient d'un seul tenant à une pièce en fer doux 126, qui est en forme de cuvette, et dont elle forme, périphériquement, le rebord.

Par son fond, cette pièce 126 forme l'organe de fermeture 17, qui est ainsi constitué par un clapet, et, pour son application contre le siège de clapet 19 correspondant, cet organe de fermeture 17 porte, dans cette forme de réalisation, un joint d'étanchéité 18.

Une tige 92, vissée dans un perçage taraudé 127 de l'organe de fermeture 17 après traversée du joint d'étanchéité 18, et contrebutée contre celui-ci par un anneau élastique fendu 128, porte, comme précédemment, pour le contrôle de la communication 60, un deuxième organe de fermeture 112, à joint d'étanchéité torique 115, l'ensemble constituant un attelage mobile 95.

Les dispositions sont donc encore du type des précédentes.

Mais, à la différence de celles-ci, il n'y a pas de deuxième aimant.

Au contraire, les moyens de commande de l'organe de fermeture 17 comportent, dans ce cas, outre le premier aimant 90, des moyens élastiques d'écartement propres à solliciter l'armature 91 en direction opposée à ce premier aimant 90.

Dans la forme de réalisation représentée, ces moyens élastiques d'écartement sont constitués par un ressort de compression 130 intervenant entre l'armature 91 et le premier aimant 90, ce ressort de compression 130 étant en pratique interposé entre, d'une part, le fond de la pièce 126 à laquelle appartient l'armature 91, et, d'autre part, la coupelle 120 dont est solidaire le premier aimant 90.

Dans les formes de réalisation décrites en référence aux figures 9 à 12, la pression à laquelle est sensible le détecteur de pression 22 est une pression différentielle, ce qui permet normalement de s'affranchir d'un quelconque tarage sur la valeur propre de la pression du réseau concerné.

Il n'en est pas de même dans la variante de réalisation représentée sur la figure 13.

Au contraire, dans celle-ci, et comme cela était le cas dans les formes de réalisation décrites en référence aux figures 1 à 8, la pression à laquelle est sensible le détecteur de pression 22 est, directement, la pression régnant dans le passage 16 s'étendant entre l'embout d'entrée 15A et l'embout de sortie 15D.

En effet, dans cette forme de réalisation, le détecteur de pression 22 est constitué par le deuxième organe de fermeture 112, celui contrôlant la communication 60 donnant accès au volume d'évacuation 61.

Dans la forme de réalisation représentée sur la figure 13, les dispositions sont assez semblables à celles décrites en référence sur la figure 12, ce deuxième organe de fermeture 112 étant attelé, par une tige 92, à l'armature 91, ou, plus précisément, à la pièce en forme de cuvette 126 dont cette armature 91 forme le rebord périphérique.

Mais, conjointement, dans cette forme de réalisation, le premier aimant 90, auquel est associée une coupelle 120, est fixe, ce premier aimant 90 étant pris entre, d'une part, l'anneau élastique fendu 97, et, d'autre part, le bouchon 34.

En service, l'armature 91 est normalement collée contre le premier aimant 90, et, donc, l'organe de fermeture 17 est écarté de son siège de clapet 19, cependant que le deuxième organe de fermeture 112 obture la communication 60.

En cas de gel, la pression dans le passage 16 augmente, et il arrive à un moment où, surmontant la force électromagnétique, la force à laquelle est soumis le deuxième organe de fermeture 112 du fait de cette pression est suffisante pour chasser vers le bas, suivant la flèche F4 de la figure 13, ce deuxième organe de fermeture 112, en détachant ainsi l'armature 91 du premier aimant 90.

Du fait que la pression s'exerce dans le bon sens, elle peut être suffisante pour maintenir ensuite le premier organe de fermeture 17 contre le siège de clapet 19.

Mais, si désiré, et tel que représenté, il peut être prévu un deuxième aimant 96, à coupelle 120, qui, calé sur le corps 14, entre un épaulement transversal 98 de celui-ci et un anneau élastique fendu 99, accélère le mouvement de fermeture de l'organe de fermeture 17 et maintient ensuite celui-ci énergiquement appliqué contre son siège de clapet 19.

Dans ce qui précède, les deux organes de fermeture 17 et 112 appartiennent, de manière rigide, à un même attelage mobile 95, formant gâchette.

Mais, si désiré, et pour mieux ajuster leurs parcours respectifs, il peut intervenir, entre ces deux organes de fermeture 17 et 112, une transmission de démultiplication, ces organes de fermeture 17 et 112 pouvant, par exemple, suivant une variante de réalisation non représentée, être chacun individuellement solidaires de tiges parallèles auxquelles est articulée une bielle montée elle-même pivotante en un point fixe entre ces tiges.

La présente invention ne se limite d'ailleurs pas aux formes de réalisation décrites et représentées, mais englobe toute variante d'exécution et/ou de combinaison de leurs divers éléments.

En particulier, pour les formes de réalisation représentées sur les figures 9 à 13, il peut être prévu, comme dans les formes de réalisations décrites en référence aux figures 1 à 5, une poignée de réarmement apte à ramener à la demande l'organe de fermeture à sa position normale d'ouverture, par action sur l'attelage mobile, formant gâchette, auquel appartient cet organe de fermeture.

De plus, pour l'organe de fermeture à mettre en oeuvre, toutes les formes de clapets, boisseaux, papillons, membranes ou autres sont envisageables.

En outre, pour parfaire la vidange automatique d'un circuit à protéger, il peut être avantageux d'équiper ce circuit de purgeurs, en implantant un tel purgeur à chacun de ses points hauts et à chacun de ses points bas.

Corollairement, pour la protection plus spécifique d'un circuit de distribution d'eau chaude à partir d'un chauffe-eau, dont le groupe de sécurité comporte, usuellement, par lui-même, un clapet anti-retour, il suffit, en association avec un robinet de protection placé sur l'arrivée d'eau froide, d'un vidangeur, c'est-à-dire d'un robinet de même type mais ne présentant pas nécessairement un organe de fermeture, placé, lui, sur le circuit d'eau chaude, au point le plus bas de ce dernier.

D'une manière plus générale, il suffit dans le cas de la protection contre les dégâts du gel d'une installation de distribution d'eau, de mettre en oeuvre, sur au moins un tronçon de circuit de celle-ci, un détecteur de pression et à asservir à ce détecteur de pression des moyens de fermeture et/ou de vidange propres à assurer l'isolement de ce tronçon de circuit vis-à-vis de l'arrivée d'eau correspondante et/ou sa mise en communication avec un volume d'évacuation ou une vidange.

Mais le domaine d'application de l'invention n'est pas non plus limité à celui de la seule protection contre les dégâts du gel des installations de distribution d'eau.

Il peut tout aussi bien s'étendre à la protection des personnes contre le risque d'éclatement par surpression des circuits dans lesquels intervient par exemple de la vapeur ou un fluide dangereux.

De même, il peut s'étendre à la protection de tout matériel de laboratoire et/ou de tout matériel industriel sensible aux surpressions.

## Revendications

1. Robinet de protection, du genre comportant, dans un corps (14), un organe de fermeture (17, 17'), qui, disposé entre un embout d'entrée (15A) destiné à être raccordé à une arrivée de fluide (10A) et un embout de sortie (15D) destiné à être raccordé à un circuit (10D) à desservir en fluide, est susceptible d'occuper dans ledit corps (14) l'une ou l'autre de deux positions, à savoir une position d'ouverture, pour laquelle il laisse libre le passage (16) s'étendant entre l'embout d'entrée (15A) et l'embout de sortie (15D), et une position de fermeture pour laquelle il occulte ledit passage (16), et des moyens de commande propres à agir sur ledit organe de fermeture (17, 17'), caractérisé en ce qu'il comporte un détecteur de pression (22), qui est sensible à la pression régnant dans un tronçon de circuit s'étendant d'un clapet anti-retour (24) disposé en amont de l'organe de fermeture à un organe d'arrêt (12) disposé en aval de celui-ci, et auquel sont asservis les moyens de commande (27, 27') dudit organe de fermeture (17, 17').

2. Robinet de protection suivant la revendication 1, caractérisé en ce que le détecteur de pression (22) est disposé dans un logement (23) débouchant dans le passage (16) entre l'embout d'entrée (15A) et l'embout de sortie (15D).

3. Robinet de protection suivant la revendication 2, caractérisé en ce que les moyens de commande de l'organe de fermeture (17, 17') comportent des moyens élastiques (27, 27') propres à agir sur ledit organe de fermeture (17, 17') sous le contrôle d'une gâchette (28, 28'), et le détecteur de pression (22) comporte un tiroir (36), formant détente, qui, monté mobile à étanchéité dans le logement (23) correspondant, à l'encontre de moyens élastiques de rappel (41) le sollicitant en permanence en direction du débouché dudit logement (23) dans le passage (16) entre l'embout d'entrée (15A) et l'embout de sortie (15D), est apte à provoquer la libération de ladite gâchette (28, 28').

4. Robinet de protection suivant la revendication 3, caractérisé en ce que, entre le corps (14) et la gâchette (28, 28') sont prévus des moyens de verrouillage débrayables, qui sont aptes à maintenir en position armée d'enclenchement ladite gâchette (28, 28'), et qui sont soumis en débrayage au tiroir (36) formant détente du détecteur de pression (22).

5. Robinet de protection suivant la revendication 3, caractérisé en ce que la gâchette (28) est une pièce globalement cylindrique, qui est montée mobile axialement dans un logement (29) s'étendant latéralement par rapport au passage (16) entre l'embout d'entrée (15A) et l'embout de sortie (15D), et qui sert elle-même de logement au tiroir (36) formant détente du détecteur de pression (22).

6. Robinet de protection suivant les revendications 4, 5, prises conjointement, caractérisé en ce que les moyens de verrouillage débrayables associés à la gâchette (28) comportent au moins un organe d'encliquetage (44), qui, monté mobile transversalement dans un logement (45) prévu pour lui dans ladite gâchette (28), est apte à coopérer en verrouillage avec un logement (46) également prévu pour lui sur le corps (14), le tiroir (36) formant détente du détecteur de pression (22) comportant, d'une part, un tronçon lisse (47), par lequel il est apte à maintenir ledit organe d'encliquetage (44) en prise avec ledit logement (46) du corps (14), et, d'autre part, un tronçon encoché (48), par lequel il est apte à le libérer.

7. Robinet de protection suivant la revendication 3, caractérisé en ce que la gâchette (28') est un levier, qui est monté pivotant, et sur lequel est apte à agir le tiroir (36) formant détente du détecteur de pression (22).

8. Robinet de protection suivant les revendications 4, 7, prises conjointement, caractérisé en ce que les moyens de verrouillage débrayables associés à la gâchette (28') comportent un ergot (83), qui, prévu en saillie sur l'un quelconque des éléments que constituent le corps (14) et ladite gâchette (28'), est propre à coopérer en emboîtement avec un logement (84) prévu de manière complémentaire en creux sur l'autre desdits éléments.

9. Robinet de protection suivant la revendication 3, caractérisé en ce que l'organe de fermeture (17) est un clapet, qui, monté mobile parallèlement à lui-même pour être apte à s'appliquer à un siège de clapet (19), est disposé dans l'alignement de la gâchette (28) contrôlant ses moyens de commande, et les moyens élastiques (27) appartenant à ces moyens de commande sont constitués par un organe élastique de compression agissant sur ladite gâchette (28).

10. Robinet de protection suivant la revendication 3, caractérisé en ce que l'organe de fermeture (17') est un boisseau, qui, monté rotatif dans un siège de clapet (19') complémentaire, est calé en rotation sur un axe (80) sur lequel est articulée la gâchette (28') contrôlant ses moyens de commande, et les moyens élastiques (27') appartenant à ces moyens de commande sont constitués par un organe élastique de torsion agissant sur ledit axe (80).

11. Robinet de protection suivant la revendication 1, caractérisé en ce que, distinct de l'organe de fermeture (17, 17'), le clapet anti-retour (24) est implanté dans son corps (14).

12. Robinet de protection suivant la revendication 3, caractérisé en ce que, le clapet constituant ledit organe de fermeture (17) étant monté mobile à l'encontre de moyens élastiques de rappel (73) le sollicitant en permanence en direction de son siège de clapet (19), ledit organe de fermeture (17) constitue par lui-même le clapet anti-retour (24), et, en position de déclenchement, la gâchette (28) l'applique contre ledit siège de clapet (19).

13. Robinet de protection suivant la revendication 1, caractérisé en ce que le détecteur de pression (22) intervient en aval de l'organe de fermeture (17, 17').

14. Robinet de protection suivant la revendication 3, caractérisé en ce que les moyens élastiques de rappel du tiroir (36) du détecteur de pression (22) comportent un organe élastique de compression (41) prenant appui sur un organe de tarage (40) réglable en position.

15. Robinet de protection suivant la revendication 1, caractérisé en ce qu'il est prévu une communication (60, 60') entre, d'une part, le passage (16) qui s'étend entre l'embout d'entrée (15A) et l'embout de sortie (15D), et, d'autre part, un volume d'évacuation (61, 61') susceptible d'être relié à une décharge, et, comme l'organe de fermeture (17, 17'), ladite communication (60, 60') est sous le contrôle du détecteur de pression (22).

16. Robinet de protection suivant les revendications 9 et 15, prises conjointement, caractérisé en ce que le volume d'évacuation (61) s'étend annulairement autour de la gâchette (28), et la communication (60) correspondante est occultée par ladite gâchette (28) quand celle-ci est en position armée d'enclenchement.

17. Robinet de protection suivant les revendications 10 et 15, prises conjointement, caractérisé en ce que le volume d'évacuation (61') s'étend latéralement, et la communication (60') correspondante est constituée par un perçage, qui, affectant transversalement le boisseau formant l'organe de fermeture (17'), débouche dans le passage (81) de celui-ci.

18. Robinet de protection suivant la revendication 1, caractérisé en ce que les moyens de commande de l'organe de fermeture (17) comportent au moins un premier aimant (90), et ledit organe de fermeture (17) est attelé à une ouverture (91), qui, disposée entre lui et ledit premier aimant (90), est soumise à ce dernier.

19. Robinet de protection suivant la revendication 18, caractérisé en ce que ledit premier aimant (90) est mobile sous le contrôle du détecteur de pression (22), et les moyens de commande de l'organe de fermeture (17) comportent en outre un deuxième aimant (96), qui, disposé de l'autre côté de l'armature (91) par rapport au premier, est fixe.

20. Robinet de protection suivant la revendication 18, caractérisé en ce que ledit premier aimant (90) est mobile sous le contrôle du détecteur de pression (22), et les moyens de commande de l'organe de fermeture (17) comportent en outre des moyens élastiques d'écartement propres à solliciter l'armature (91) en direction opposée audit premier aimant (90).

21. Robinet de protection suivant la revendication 20, caractérisé en ce que lesdits moyens élastiques d'écartement sont constitués par un ressort de compression (130) intervenant entre l'armature (91) et ledit premier aimant (90).

22. Robinet de protection suivant la revendication 18, caractérisé en ce que l'armature (91) est constituée par un troisième aimant.

23. Robinet de protection suivant la revendication 18, caractérisé en ce que l'armature (91) est constituée par une pièce en fer doux (126).

24. Robinet de protection suivant la revendication 18, caractérisé en ce que le détecteur de pression (22) est constitué par une chambre à volume variable, qui s'étend du côté du premier aimant (90) opposé à l'armature (91), et de la paroi mobile (106) de laquelle est solidaire ce premier aimant (90).

25. Robinet de protection suivant la revendication 24, caractérisé en ce que, du côté de sa paroi mobile (106) opposé au premier aimant (90), ladite chambre à volume variable est adaptée à être reliée à l'arrivée de fluide (10A), et, du côté de sa paroi mobile (106) opposé au précédent, elle est en relation avec le passage (16) s'étendant entre l'embout d'entrée (15A) et l'embout de sortie (15D).

26. Robinet de protection suivant la revendication 18, caractérisé en ce que l'organe de fermeture (17) est constitué par un clapet.

27. Robinet de protection suivant la revendication 18, caractérisé en ce que à l'organe de fermeture est asservi un deuxième organe de fermeture (112), et ledit deuxième organe de fermeture (112) contrôle une communication (60) établie entre, d'une part, le passage (16) qui s'étend entre l'embout d'entrée (15A) et l'embout de sortie (15D), et, d'autre part, un volume d'évacuation (61).

28. Robinet de protection suivant la revendication 27, caractérisé en ce que les deux organes de fermeture (17, 112) appartiennent à un même attelage (95).

29. Robinet de protection suivant la revendication 27, caractérisé en ce que entre les deux organes de fermeture (17, 112) intervient une transmission de démultiplication.

30. Robinet de protection suivant la revendication 1, caractérisé en ce que les moyens de commande de l'organe de fermeture (17) comportent un aimant (90), et ledit organe de fermeture (17) est attelé à une armature (91), qui, disposée entre lui et ledit aimant (90), est soumise au détecteur de pression (22).

31. Robinet de protection suivant la revendication 30, caractérisé en ce que ledit aimant (90) est fixe.

32. Robinet de protection suivant les revendications 27 et 30, prises conjointement, caractérisé en ce que le détecteur de pression (22) est constitué par ledit deuxième organe de fermeture (112).

33. Robinet de protection suivant la revendication 1, caractérisé en ce que, à l'organe de fermeture (17, 17'), il est associé une poignée de réarmement (50, 50').

34. Procédé de protection d'une installation de distribution d'eau contre les dégâts du gel, caractérisé en ce qu'il consiste à mettre en oeuvre, sur au moins un tronçon de circuit (10D) de cette installation, un détecteur de pression (22) et à asservir à ce détecteur de pression (22) des moyens de fermeture et/ou de vidange (17, 17') propres à assurer l'isolement de ce tronçon de circuit (10D) vis-à-vis de l'arrivée d'eau (10A) correspondante et/ou sa mise en communication avec un volume d'évacuation (61, 61') ou une vidange.

*FIG.1*

*FIG. 2*

FIG.3

FIG.4

FIG.5

FIG.6

FIG.7

FIG.8

## FIG. 9

## FIG. 10

FIG.11

FIG.12

FIG.13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 424 194 (KRUZAN)<br>* Colonne 2, ligne 16 - colonne 4, ligne 22 *<br><br>--- | 1-4,6,9 ,13,14 | E 03 B 7/12<br>F 16 K 17/164 |
| A | GB-A- 738 582 (SAUNDERS)<br>* Page 2, ligne 47 - page 3, ligne 2 *<br>----- | 1-4,8, 10 | |

DOMAINES TECHNIQUES RECHERCHES (Int. Cl.4)

E 03 B
F 16 K

**Le présent rapport a été établi pour toutes les revendications**

| Lieu de la recherche | Date d'achèvement de la recherche | Examinateur |
|---|---|---|
| LA HAYE | 31-10-1988 | VERELST P.E.J. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
......................................................................................
& : membre de la même famille, document correspondant

EPO FORM 1503 03.82 (P0402)